# EUROPEAN PATENT SPECIFICATION

(11) **EP 3 150 020 B1**
(45) Date of publication and mention of the grant of the patent: **07.08.2019**
(21) Application number: 14737050.6
(22) Date of filing: 02.06.2014
(51) Int. Cl.: H04W 76/19, H04W 76/11, H04L 29/12, H04L 29/08

(54) **RE-ESTABLISHMENT OF A FAILED COMMUNICATION SESSION**
WIEDERHERSTELLUNG EINER FEHLERHAFTEN KOMMUNIKATIONSSITZUNG
RÉTABLISSEMENT D'UNE SESSION DE COMMUNICATION DÉFAILLANTE

(43) Date of publication of application: 05.04.2017
(73) Proprietor: Telefonaktiebolaget LM Ericsson (publ), 164 83 Stockholm (SE)
(72) Inventor: ERIKSSON, Hans, 192 48 Sollentuna (SE)
(74) Representative: Ericsson
(86) International application number: PCT/SE2014/050669
(87) International publication number: WO 2015/187069

(56) References cited:
- EP-A1- 1 521 487
- EP-A1- 2 592 865
- EP-A2- 1 626 554
- WO-A1-2011/015248

## Description

### TECHNICAL FIELD

The invention relates to a method and a device in an Evolved Packet System (EPS) communications network of facilitating re-establishing of a failed communications session undertaken via a plurality of EPS nodes. The invention further relates to a computer program performing the method according to the present invention, and a computer program product comprising computer readable medium having the computer programs embodied therein.

### BACKGROUND

The 3rd Generation Partnership Project (3GPP) Evolved Packet Core (EPC) architecture is designed according to a "single point of failure"-architecture with a fixed anchor point in the so called Packet Data Network Gateway (PGW). An ongoing session will, in case of failure, crash and has to be re-established on request from a user or application layer. From a system design perspective, this problem can be avoided if the node implementation is designed to handle hardware (HW) errors and have a so called "hot-standby" type of implementation, where a standby (i.e. redundant) HW node is continuously updated with all states from the "hot" HW node. The drawback is that the most frequent failures are software (SW) errors and in this case it is also likely that the standby HW node is updated with same errors as the hot (i.e. failed) node.

In a transition from traditional vertical integrated EPC products, to virtualized EPC SW functions, e.g. a complete EPC or functional node by node structure comprising Serving Gateway (SGW), previously mentioned PGW, Mobility Management Entity (MME), etc., or any other functional division of an Evolved Packet System (EPS) network executing on any cloud platform that does not support a hot-standby HW redundancy architecture, there is thus a problem that needs to be solved.

There are different prior art solutions to building high availability systems, e.g. cloud solutions partly supporting high availability with Virtual Machine (VM) migrations, duplicated HW resources with hot standby-solutions to bring up the system after a crash and solutions for network redundancy where the network function itself has the knowledge to secure that its function and states are duplicated in another instance in the network and such that the other instance can take over in case of a system crash.

WO 20 11/ 015248 discloses a method attempting to perform recovery from an unexpected radio link recovery. A backup user context is created for a terminal device served currently by a relay base station relaying a radio connection between the terminal device and fixed cellular network infrastructure comprising a fixed base station communicating with the relay base station, wherein the backup user context is prepared for use in case of an unexpected radio link failure. Upon detection of the radio link failure in a primary user context being used in the communication, the backup user context is applied before the terminal device enters an idle state as a result of the radio link failure.

### SUMMARY

An object of the present invention is to solve, or at least mitigate this problem in the art, and to provide an improved method of restoring a communications session in a communications network.

This object is attained in a first aspect of the present invention by a method in an Evolved Packet System (EPS) communications network of facilitating re-establishing of a failed communications session undertaken via a plurality of EPS nodes. The method comprises acquiring EPS bearer context data of each of the plurality of EPS nodes involved in the communication session, and combining the acquired EPS bearer context data of each of the plurality of EPS nodes into EPS bearer context data common to the plurality of EPS nodes. Thereafter, the common EPS bearer context data is associated with a communication session identifier and an identifier of each of the plurality of EPS nodes involved in the communication session, and stored for re-establishment of the communications session from the common stateful session data in case of failure.

This object is attained in a second aspect of the present invention by a a network node in an Evolved Packet System (EPS) communications network configured to facilitate re-establishing of a failed communications session undertaken via a plurality of EPS nodes. The network node comprises a processing unit and a memory, which memory contains instructions executable by the processing unit, whereby said network node is operative to acquire EPS bearer context data of each of the plurality of EPS nodes involved in the communication session, and to combine the acquired EPS bearer context data of each of the plurality of EPS nodes into EPS bearer context data common to the plurality of EPS nodes. Further, the network node is operative to associate the common EPS bearer context data with a communication session identifier and an identifier of each of the plurality of EPS nodes involved in the communication session, and to store the common EPS bearer context data and the identifiers for re-establishment of the communications session from the common EPS bearer context data in case of failure.

Advantageously, when a network entity referred to as a virtualized network function (VNF) or EPS node (such as e.g. a PGW, an SGW or an MME) crashes, the communication session handled by VNF shall be re-established to its latest functioning state current state preceding the VNF failure. To this effect, an embodiment of the present invention acquires so called stateful data of the communication session for subsequent storage in a database. Stateful data is typically data taking account previous data and events occurring during the communication session. The stateful session data is hence dynamic and continuously changing data which need to be considered in order to have the session running. In contrast, stateless data are handled based on information that comes with it, and is not dependent on preceding events. In the context of an EPS communications network, the stateful data of a communication session is referred to as EPS bearer context.

When running a communication session with e.g. a terminal such as a User Equipment (UE), every EPS node involved in the communication session will continuously updated its stateful session data for the communication session. In embodiments of the present invention, the stateful session data of each EPS node is combined into common stateful session data.

The common stateful session data is associated with a communication session identifier, such that the common stateful session data subsequently can be matched to a particular communication session. The common stateful session data and the identifier of the common session data, along with the identifier of each of the plurality of EPS nodes involved in the communication session, are stored such that it can be fetched for re-establishment of the communication session in case of failure. Thus, upon system failure, a VNF/EPS node can fetch the stored common stateful session data and the identifier for restoring the communication session that was affected by the failure. The EPS node identifier could e.g. be embodied in the form of an Internet Protocol (IP) address, or a more general identifier, such that each EPS node involved in the session can be identified upon re-instantiation.

The common stateful session data is configured such that an EPS node can be re-instantiated after failure with maintained information regarding e.g. bearer context state information, terminal with which the communication session was set-up, network addresses to the services utilized during the session, etc. The common stateful session data, may be stored in a database record in a cloud infrastructure (centralized or distributed cloud). Advantageously, the EPS node is re-instantiated to its last functioning state by fetching the corresponding EPS bearer context in the database, thus providing a reliable and robust system. By re-instantiating one or more EPS nodes involved in a particular communication session, the states of the EPS nodes become synchronized such that the communication session is re-established. Hence, when the EPS node(s) is restarted after failure, a state re-synchronization procedure is initiated to secure a stable system.

Further provided is a computer program performing the method according to the present invention, and a computer program product comprising computer readable medium having the computer program embodied therein.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figure 1 shows a schematic overview of an exemplifying wireless communication system in which the present invention can be implemented;
Figure 2 shows a simplified version of the system discussed in detail in Figure 1;
Figure 3 illustrates the system of Figure 2 with embodiments of the present invention implemented;
Figure 4 illustrates a flow chart of an embodiment of the method according to the present invention;
Figure 5 illustrates a flow chart of another embodiment of the method according to the present invention; and
Figure 6 shows a network node according to an embodiment of the present invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

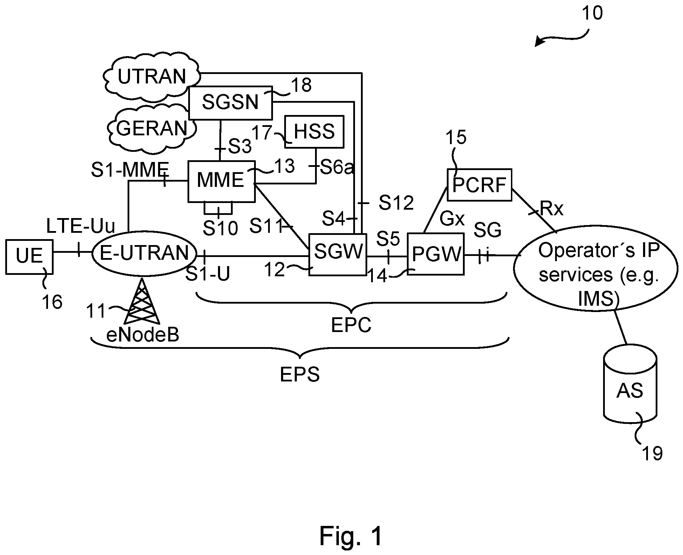

Figure 1 shows a schematic overview of an exemplifying wireless communication system 10 in which the present invention can be implemented. The wireless communication system 10 is an LTE based system. It should be pointed out that the terms "LTE" and "LTE based" system is here used to comprise both present and future LTE based systems, such as, for example, advanced LTE systems. It should be appreciated that although Figure 1 shows a wireless communication system 10 in the form of an LTE based system, the example embodiments herein may also be utilized in connection with other wireless communication systems, such as e.g. Global System for Mobile Communications (GSM) or Universal Mobile Telecommunications System (UMTS), comprising nodes and functions that correspond to the nodes and functions of the system in Figure 1.

The wireless communication system 1 comprises a base station in the form of an eNodeB 11, operatively connected to an SGW 12, in turn operatively connected to an MME 13 and a PGW 14, which in turn is operatively connected to a Policy and Charging Rules Function (PCRF) 15. The eNodeB 11 is a radio access node that interfaces with a mobile radio terminal, e.g. a UE 16. The eNodeBs of the system forms the radio access network Evolved Universal Terrestrial Radio Access Network (E-UTRAN) for LTE communicating with the UEs over an air interface such as LTE-Uu. The core network in LTE is known as EPC, and the EPC together with the E-UTRAN is referred to in LTE as the Evolved Packet System (EPS). The SGW 12 routes and forwards user data packets over the Si-U interface, whilst also acting as the mobility anchor for the user plane during inter-eNodeB handovers and as the anchor for mobility between LTE and other 3GPP technologies (terminating S4 interface and relaying the traffic between 2G/3G systems and the PGW 14). For idle state UEs, the SGW 12 terminates the downlink (DL) data path and triggers paging when DL data arrives for the UE 16, and further manages and stores UE contexts, e.g. parameters of the IP bearer service, network internal routing information. It also performs replication of the user traffic in case of lawful interception. The SGW 12 communicates with the MME 13 via interface S11 and with the PGW 14 via the S5 interface. Further, the SGW 12 may communicate with the UMTS radio access network UTRAN and with the GSM EDGE ("Enhanced Data rates for GSM Evolution") Radio Access Network (GERAN) via the S12 interface.

The MME 13 is responsible for idle mode UE tracking and paging procedure including retransmissions. It is involved in the bearer activation/deactivation process and is also responsible for choosing the SGW 12 for a UE 16 at the initial attach and at time of intra-LTE handover involving core network node relocation. It is responsible for authenticating the user by interacting with the Home Subscriber Server (HSS) 17. The Non-Access Stratum (NAS) signaling terminates at the MME 13 and it is also responsible for generation and allocation of temporary identities to UEs via the Si-MME interface. It checks the authorization of the UE 16 to camp on the service provider's Public Land Mobile Network (PLMN) and enforces UE roaming restrictions. The MME 13 is the termination point in the network for ciphering/integrity protection for NAS signaling and handles the security key management. Lawful interception of signaling is also supported by the MME. The MME 13 also provides the control plane function for mobility between LTE and 2G/3G access networks with the S3 interface terminating at the MME 13 from a Serving GPRS ("General Packet Radio Service ") Support Node (SGSN) 18. The MME 13 also terminates the S6a interface towards the home HSS 17 for roaming UEs. Further, there is an interface S10 configured for communication between MMEs for MME relocation and MME-to-MME information transfer.

The PGW 14 provides connectivity to the UE 16 to external packet data networks (PDNs) by being the point of exit and entry of traffic for the UE 16. A UE may have simultaneous connectivity with more than one PGW for accessing multiple PDNs. The PGW 14 performs policy enforcement, packet filtering for each user, charging support, lawful interception and packet screening. Another key role of the PGW 14 is to act as the anchor for mobility between 3GPP and non-3GPP technologies such as WiMAX and 3GPP2 (CDMA 1X and EvDO). The interface between the PGW 14 and the packet data network is referred to as the SGi. The packet data network may be an operator external public or private packet data network or an intra operator packet data network, e.g. for provision IP Multimedia Subsystem (IMS) services.

The PCRF 15 determines policy rules in real-time with respect to the radio terminals of the system. This may e.g. include aggregating information in real-time to and from the core network and operational support systems, etc. of the system so as to support the creation of rules and/or automatically making policy decisions for user radio terminals currently active in the system based on such rules or similar. The PCRF 15 provides the PGW 14 with such rules and/or policies or similar to be used by the acting PGW as a Policy and Charging Enforcement Function (PCEF) via interface Gx. The PCRF further communicates with the packet data network via the Rx interface. One or more application servers 19 are connected to the EPS.

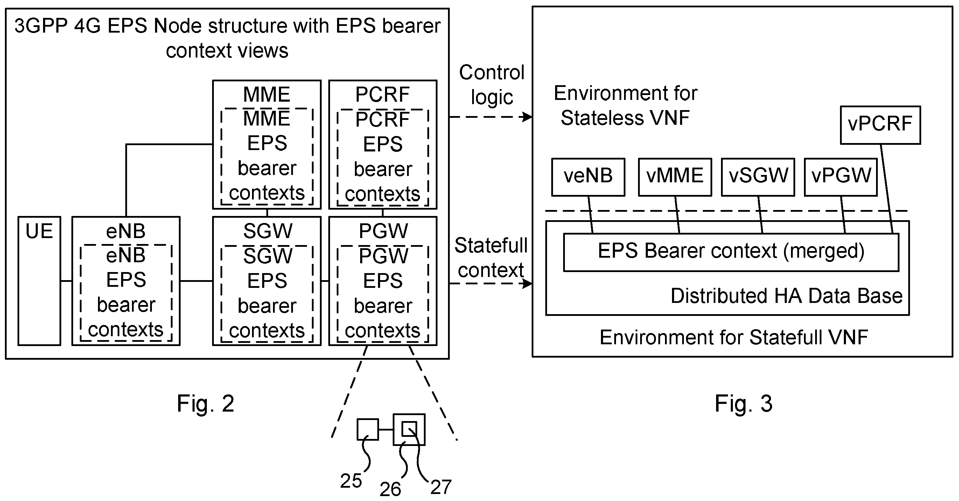

Figure 2 shows a simplified version of the LTE system 10 discussed in detail in Figure 1 comprising VNFs/EPS nodes in the form of a UE 16, an eNodeB 11, and SGW 12, an MME 13, a PGW 14, and a PCRF 15. As previously has been discussed, in case of failure in any one of the VNFs, the communication session with the UE 16 is typically lost. Even though HW redundancy has been proposed in the art, these redundant, "hot standby" nodes cannot recover from SW failures.

Figure 3 illustrates an embodiment of the present invention, where the EPS nodes of Figure 2 are illustrated in virtualized versions, i.e. veNodeB 11a, vSGW 12a, vMME 13a, vPGW 14a, and vPCRF 15a. The data corresponding to a communications session with the UE 16 is separated in stateful data and stateless data, where the stateful data - i.e. the EPS bearer context - of each EPS node involved in the commination session is acquired and combined into an EPS bearer context data set common to all the EPS nodes. A communication session identifier is associated with the common EPS bearer context, as well as an identifier of each of the EPS nodes involved in the communication session, and the identifiers and the common EPS bearer context are stored in a distributed HA database accessible by each virtual node for subsequent re-establishment of the failed communication session. The HA database may be accommodated in an appropriate storage medium such as a server 19.

As is further illustrated in Figure 3, control logic at each EPS node may execute temporary states pertaining to, for instance, signaling for set-up and release of a connection, which are stored locally at the control logic. In case of failure or crash of an EPS node, its locally stored states may be lost. Therefore, such control logic should preferably be stateless, in which case the signaling with the other EPS nodes can be performed as usual during re-establishment of a communication session since there are no states in the control logic to which each EPS must synchronize.

Thus, the EPS bearer context of the respective EPS node is acquired and merged into a common EPS bearer context data set stored in the HA database. The merged common EPs bearer context is subsequently used by each of the EPS nodes (eNodeB 11, and SGW 12, an MME 13, a PGW 14, and a PCRF 15) to re-establish a failed communication session. The nodes illustrated in Figures 2 and 3 will alternately be referred to as VNFs or EPS nodes throughout the description.

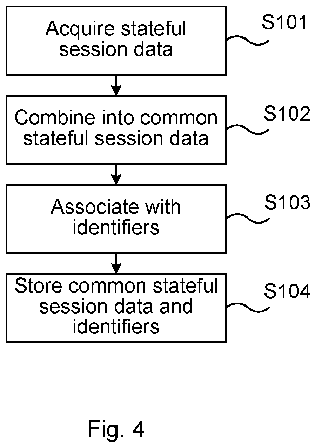

Figure 4 illustrates a flow chart of an embodiment of the method according to the present invention, where the method is exemplified to be undertaken in any appropriate VNF/EPS node of the LTE wireless communications network 10, for instance the PGW 14 discussed with reference to Figures 2 and 3. In practice, the method at the PGW 14 is performed by a processing unit 25 embodied in the form of one or more microprocessors arranged to execute a computer program 27 downloaded to a suitable storage medium 26 associated with the microprocessor, such as a Random Access Memory (RAM), a Flash memory or a hard disk drive. The processing unit 25 is arranged to carry out the method according to embodiments of the present invention when the appropriate computer program 27 comprising computer-executable instructions is downloaded to the storage medium 16 and executed by the processing unit 25. The storage medium 26 may also be a computer program product comprising the computer program 27. Alternatively, the computer program 27 may be transferred to the storage medium 26 by means of a suitable computer program product, such as a floppy disk or a memory stick. As a further alternative, the computer program 27 may be downloaded to the storage medium 26 over a network. The processing unit 25 may alternatively be embodied in the form of a digital signal processor (DSP), an application specific integrated circuit (ASIC), a field-programmable gate array (FPGA), a complex programmable logic device (CPLD), etc.

When running a communication session with the UE 16, every EPS node involved in the communication session will occasionally acquire a snap shot of its EPS bearer context of the communication session. Thus, as an example, in a first step S101, the PGW 14 acquires the stateful session data, i.e. the EPS bearer context for the particular communication session established with the UE 16, from the perspective of the PGW 14. The other EPS nodes involved in the communication session will acquire their respective EPS bearer context.

Possibly, one of the EPS nodes, such as the PGW 14 or the server 19 hosting the HA database, will act as a supervising node and combine the EPS bearer context from the respective EPS node into a common EPS bearer context and included it in the HA database. As an alternative, each EPS node will include its EPS bearer context in the common EPS bearer context accommodated in the database stored in the server. The combining of the individual EPS bearer contexts into a common EPS bearer context can thus be performed in a distributed manner by a plurality of nodes, or centralized by one supervising node.

In step S102, the common EPS bearer context is associated with an identifier, such that it subsequently can be matched to the particular communication session (each EPS node normally runs numerous communication sessions with a plurality of terminals and/or application servers 19). Further, the common EPS bearer context is associated with an identifier of each of the EPS nodes involved in the communication session for subsequent identification upon re-instantiating of one or more of the EPS nodes. Finally, in step S103, the common EPS bearer context, the associated session identifier and the EPS node identifiers are stored such that it can be fetched for re-establishment of the communication session in case of PGW failure. Thus, upon system failure, a VNF/EPS node (for instance the PGW 14) can fetch the stored common EPS bearer context, the associated identifier for the particular communication session to which the common EPS bearer context pertains, and the EPS node identifier, for restoring the communication session that was affected by the failure.

If all the VNFs of Figure 3 combine their EPS bearer context into a common EPs bearer context, a robust EPS network is advantageously provided, since the communication session handled by the VNFs can be re-established to its latest functioning state current state preceding the VNF failure.

The stateful session data of the EPS network10 to be acquired and stored for subsequent communication session re-establishment according to embodiments of the present invention may for instance comprise:
- EPS bearer context that describes the connectivity from the UE 16 to nodes upstream of the PGW 14, such as to the application server 19 upstream of the SGi interface, in terms of e.g. Tunnel IP addresses termination points, Traffic Profiles, International mobile subscriber identity (IMSI), terminal identity, etc;
- EPS Bearer context for MME holding information on tracking areas (in which cell(s) the UE 16 is currently connected to, last visited or most frequently used);
- Mobility management states such as Idle, Connected, Registered or Deregistered.

Hence, for a given communication session, each VNF - i.e. each EPS node - provides its individual the EPS bearer context such that a common EPS bearer context is created for all the EPS nodes involved in the communication session. In case of failure at any one or more of the EPS nodes, each node can instantly fetch the latest EPS bearer context, from the stored common EPs bearer context, for which the communication session was up and running by addressing the database with the identifier associated with the stored common EPS bearer context. This ensures that the re-establishment of each EPS node is consistent with that of the other EPS nodes. As a consequence, the failed communication session can advantageously be restored by fetching and instantiating the EPS bearer context at the respective node based on the common EPs bearer context.

3GPP specification 23.401 describes a great number of EPS bearer contexts as seen from the various EPS nodes, such as the PGW, the SGW, the MME, etc., which can be combined into a common EPR bearer context as proposed by embodiments of the present invention, instead of communicating the EPS bearer context in a network signalling procedure undertaken between the EPS nodes involved in a communication session, as is currently done.

With respect to the communication session identifier associated with the common EPs bearer context stored in the HA database, the identifier should preferably be unique within the operator's domain and included as an identity in communication between the EPS nodes.

With reference again to Figures 2 and 3; in case any one or more of the EPS nodes eNodeB 11, SGW 12, MME 13, PGW 14, and PCRF 15 would fail or even crash due to HW and/or SW errors, the remaining EPS nodes will typically enter an undefined network state where the control logic handling inter-node communication may behave in an unexpected and erratic manner. This is avoided by means of the common EPS bearer context according to embodiments of the present invention, which provides system stability, in that each EPS node in an embodiment is re-instantiated with the common EPS bearer context upon communication session failure. Thus, the particular communication session to be re-established is identified by means of the communication session identifier, the common EPS bearer context is fetched from the HA database, and each EPS node is re-instantiated with the common EPS bearer context. As a result, the communication session is re-established to the latest functioning EPS bearer context state at each EPs node.

In embodiments of the invention, initialization of a session re-establishment process can be undertaken for different scenarios:
a. when an EPS node is to be restarted after failure, it may submit a request to the HA database for a common EPS bearer context related to an ongoing session (identified by means of a current session identifier). The EPS node to be restarted is thus re-instantiated with the common EPS bearer context associated with the ongoing communication session, and the states of the restarted EPS node thus becomes synchronized with the corresponding states of the other EPS nodes involved in the communication session. Depending on the situation, the other EPS nodes involved in the communication session may also have to be re-instantiated.
b. upon restart of an EPS node, the server accommodating the HA database actively sends the common EPS bearer context to the EPS node to be restarted (and possibly to the other EPS nodes), which is identified by the stored EPS node identifier, thereby synchronizing the states of the EPS nodes such that the communication session can be re-established.
c. an EPS node which is up and running may receive a re-synchronization signal from another EPS node (the EPS nodes each being identified by the respective EPS node identifier), or from the server hosting the HA database, that a failure has occurred at one or more EPS nodes involved in the communication session. As a consequence, the EPS node must re-synchronize with the stored current common EPS bearer context, thus setting its states in conformity with those stipulated by the common EPS bearer context. The EPS nodes hence become synchronized and the communication session is re-established.

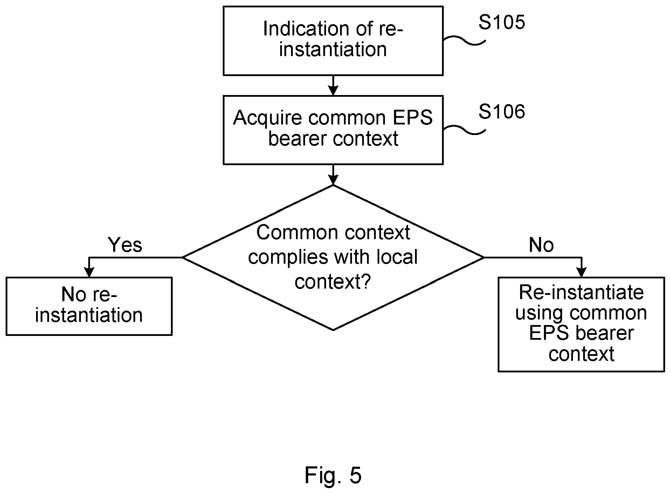

Figure 5 illustrates a flowchart of a method according to an embodiment of the present invention where one or more EPS nodes are re-instantiated such that a failed communication session can be restored.

Thus, in a first step S105, an EPS node such as the PGW 14 acquires an indication that re-instantiating may be required. As discussed hereinabove, the indication may e.g. be a result of a) the PGW 14 restarting, b) the server hosting the HA database sending an indication that re-instantiation is required to the PGW 14, or c) receiving, at the PGW 14, from any other of the EPS nodes a re-synchronization signal indicating that a failure has occurred, etc.

Thereafter, when it is indicated to the PGW 14 that re-instantiation may be required, the PGW 14 receives, or fetches depending on scenario, the common EPS bearer context from the HA database in step S106 by using the appropriate communication session identifier. In step 107, the PGW 14 determines whether its current EPS bearer context complies with that of the common EPS bearer context, i.e. if local states of the PGW 14 comply with those of the common EPS bearer context. If that is the case, there is no need to re-instantiate the PGW 14, as it already is synchronized to the states of the other EPS nodes participating in the communication session.

However, if in step S107 it is determined that the current EPS bearer context does not comply with the stored common EPS bearer context, the PGW 14 proceeds to step S108, where the PGW 14 is re-instantiated by using the stored common EPS bearer context. Thus, the states of the PGW 14 are synchronized to the states of the other EPS nodes participating in the communication session.

In this context, it should be noted that the method illustrated by the flowchart in Figure 4 may be undertaken simultaneously at a plurality, or all, of the EPS nodes. Thus, in case of a severe system crash, all the EPS nodes are likely to be re-instantiated. It can further be envisaged that in case the PGW comes to the conclusion in step S108 that re-instantiation is to be undertaken, the PGW 14 will send a re-synchronization signal to the other EPS nodes involved in the communication session, thereby effecting re-instantiation of all the involved EPSs nodes based on the stored common EPS bearer context.

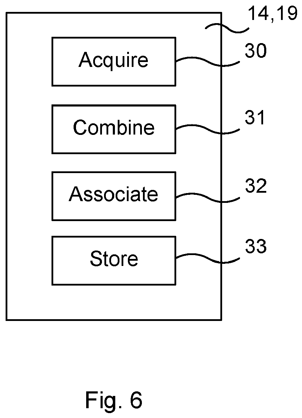

Figure 6 shows a network node according to an embodiment of the present invention, for instance the PGW 14 or the application server 19 as previously discussed, in an EPS communications network configured to facilitate re-establishing of a failed communications session undertaken via a plurality of EPS nodes. The network node 14, 19 comprises acquiring means 30 adapted to acquire stateful session data of each of the plurality of EPS nodes involved in the communication session, combining means 31 adapted to combine the acquired stateful session data of each of the plurality of EPS nodes into stateful session data common to the plurality of EPS nodes, associating means 32 adapted to associate the common stateful session data with a communication session identifier and an identifier of each of the plurality of EPS nodes involved in the communication session, and further storing means 33 adapted to store the common stateful session data and the identifiers for re-establishment of the communications session from the common stateful session data in case of failure. The acquiring means 30 and/or the storing means 33 may comprise a communications interface for receiving and providing information to other devices. The network node 14, 19 may further comprise a local storage for storing obtained data. The acquiring means 30 and/or combining means 31 and/or associating means 32 may (in analogy with the description given in connection to Figures 2 and 3) be implemented by a processor embodied in the form of one or more microprocessors arranged to execute a computer program downloaded to a suitable storage medium (e.g. embodied by the storing means 33) associated with the microprocessor, such as a RAM, a Flash memory or a hard disk drive. The acquiring means 30 and storing means 33 may comprise one or more transmitters and/or receivers and/or transceivers, comprising analogue and digital components and a suitable number of antennae for radio communication.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method in an Evolved Packet System, EPS, communications network of facilitating re-establishing of a failed communications session undertaken via a plurality of EPS nodes, being **characterized in** comprising:
acquiring (S101) EPS bearer context data of each of the plurality of EPS nodes involved in the communication session;
combining (S102) the acquired EPS bearer context data of each of the plurality of EPS nodes into EPS bearer context data common to the plurality of EPS nodes;
associating (S103) the common EPS bearer context data with a communication session identifier and an identifier of each of the plurality of EPS nodes involved in the communication session; and
storing (S104) the common EPS bearer context data and the identifiers for re-establishment of the communications session from the common EPS bearer context data in case of failure.

2. The method according to claim 1, further comprising:
re-instantiating (S108) at least one of the plurality of EPS nodes with the stored common EPS bearer context data, wherein the failed communication session identified by the communication session identifier is re-established.

3. The method according to claim 2, further comprising:
acquiring (S105) an indication of re-instantiation of at least one of the plurality of EPS nodes;
comparing (S107) current EPS bearer context data of said at least one of the plurality of EPS nodes with the stored common EPS bearer context data; wherein in case the current EPS bearer context data does not comply with the stored common EPS bearer context data, the at least one of the plurality of EPS nodes is re-instantiated.

4. The method according to claim 3, wherein the re-instantiating (S108) of said at least one of the plurality of EPS nodes comprises re-instantiating each of the plurality of EPS nodes involved in the communication session based on the stored common EPS bearer context data.

5. The method according to any one of the preceding claims, the common EPS bearer context data being stored in a database common to the involved EPS nodes.

6. A network node (14,19) in an Evolved Packet System, EPS, communications network configured to facilitate re-establishing of a failed communications session undertaken via a plurality of EPS nodes, comprising a processing unit (25) and a memory (26), said memory containing instructions executable by said processing unit, whereby said network node is **characterized in** being operative to:
acquire EPS bearer context data of each of the plurality of EPS nodes involved in the communication session;
combine the acquired EPS bearer context data of each of the plurality of EPS nodes into EPS bearer context data common to the plurality of EPS nodes;
associate the common EPS bearer context data with a communication session identifier and an identifier of each of the plurality of EPS nodes involved in the communication session; and
store the common EPS bearer context data and the identifiers for re-establishment of the communications session from the common EPS bearer context data in case of failure.

7. The network node (14, 19) according to claim 6, further being operative to:
re-instantiate at least one of the plurality of EPS nodes with the stored common EPS bearer context data, wherein the failed communication session identified by the communication session identifier is re-established.

8. The network node (14,19) according to claim 7, further being operative to:
acquire an indication of re-instantiation of at least one of the plurality of EPS nodes;
compare current EPS bearer context data of said at least one of the plurality of EPS nodes with the stored common EPS bearer context data; wherein in case the current EPS bearer context data does not comply with the stored common EPS bearer context data, the at least one of the plurality of EPS nodes is re-instantiated.

9. The network node (14, 19) according to claim 8, wherein the re-instantiating of said at least one of the plurality of EPS nodes comprises re-instantiating each of the plurality of EPS nodes involved in the communication session based on the stored common EPS bearer context data.

10. The network node (14, 19) according to any one of claims 6-9, further being operative to store the common EPS bearer context data in a database common to the involved EPS nodes.

11. The network node (14, 19) according to any one of claims 6-10, wherein said identifier of each of the plurality of EPS nodes involved in the communication session comprises an Internet Protocol, IP, address.

12. A computer program (27) comprising computer-executable instructions for causing a device (14, 19) to perform steps recited in any one of claims 1-5 when the computer-executable instructions are executed on a processing unit (25) included in the device.

13. A computer program product comprising a computer readable medium (26), the computer readable medium having the computer program (27) according to claim 12 embodied therein.

## Patentansprüche

1. Verfahren in einem Evolved Packet System-, EPS, Kommunikationsnetzwerk zum Erleichtern des Widerherstellens einer fehlgeschlagenen Kommunikationssitzung, die über eine Vielzahl von EPS-Knoten realisiert wird, **dadurch gekennzeichnet, dass** es umfasst:
Erfassen (S101) von EPS-Trägerkontextdaten von jedem aus der Vielzahl von EPS-Knoten, die an der Kommunikationssitzung beteiligt sind;
Kombinieren (S102) der erfassten EPS-Trägerkontextdaten von jedem aus der Vielzahl von EPS-Knoten zu EPS-Trägerkontextdaten, die der Vielzahl von EPS-Knoten gemein sind;
Verknüpfen (S103) der gemeinsamen EPS-Trägerkontextdaten mit einer Kommunikationssitzungskennung und einer Kennung von jedem aus der Vielzahl von EPS-Knoten, die an der Kommunikationssitzung beteiligt sind; und
Speichern (S104) der gemeinsamen EPS-Trägerkontextdaten und der Kennungen zur Wiederherstellung der Kommunikationssitzung im Fehlschlagsfall aus den gemeinsamen EPS-Trägerkontextdaten.

2. Verfahren nach Anspruch 1, weiter umfassend:
Neuinstanziieren (S108) von mindestens einem aus der Vielzahl von EPS-Knoten mit den gespeicherten gemeinsamen EPS-Trägerkontextdaten, wobei die fehlgeschlagene Kommunikationssitzung wiederhergestellt wird, die über die Kommunikationssitzungskennung identifiziert ist.

3. Verfahren nach Anspruch 2, weiter umfassend:
Erfassen (S105) einer Neuinstanziierungsanzeige von mindestens einem aus der Vielzahl von EPS-Knoten;
Vergleichen (S107) von aktuellen EPS-Trägerkontextdaten des mindestens einen aus der Vielzahl von EPS-Knoten mit den gespeicherten gemeinsamen EPS-Trägerkontextdaten; wobei falls die aktuellen EPS-Trägerkontextdaten nicht mit den gespeicherten gemeinsamen EPS-Trägerkontextdaten übereinstimmen, der mindestens eine aus der Vielzahl von EPS-Knoten neu instanziiert wird.

4. Verfahren nach Anspruch 3, wobei das Neuinstanziieren (S108) des mindestens einen aus der Vielzahl von EPS-Knoten das Neuinstanziieren von jedem aus der Vielzahl von EPS-Knoten, die an der Kommunikationssitzung beteiligt sind, auf Basis der gespeicherten gemeinsamen EPS-Trägerkontextdaten umfasst.

5. Verfahren nach einem der vorstehenden Ansprüche, wobei die gemeinsamen EPS-Trägerkontextdaten in einer Datenbank gespeichert werden, die den beteiligten EPS-Knoten gemein ist.

6. Netzwerkknoten (14, 19) in einem Evolved Packet System-, EPS, Kommunikationsnetzwerk, der dazu konfiguriert ist, das Wiederherstellen einer fehlgeschlagenen Kommunikationssitzung, die über eine Vielzahl von EPS-Knoten realisiert wird, zu erleichtern, umfassend eine Verarbeitungseinheit (25) und einen Speicher (26), wobei der Speicher Anweisungen enthält, die von der Verarbeitungseinheit ausgeführt werden können, wobei der Netzwerkknoten **dadurch gekennzeichnet ist, dass** er so betrieben werden kann, dass er:
EPS-Trägerkontextdaten von jedem aus der Vielzahl von EPS-Knoten, die an der Kommunikationssitzung beteiligt sind, erfasst,
die erfassten EPS-Trägerkontextdaten von jedem aus der Vielzahl von EPS-Knoten zu EPS-Trägerkontextdaten kombiniert, die der Vielzahl von EPS-Knoten gemein sind;
die gemeinsamen EPS-Trägerkontextdaten mit einer Kommunikationssitzungskennung und einer Kennung von jedem aus der Vielzahl von EPS-Knoten, die an der Kommunikationssitzung beteiligt sind, verknüpft; und
die gemeinsamen EPS-Trägerkontextdaten und die Kennungen zur Wiederherstellung der Kommunikationssitzung im Fehlschlagsfall aus den gemeinsamen EPS-Trägerkontextdaten speichert.

7. Netzwerkknoten (14, 19) nach Anspruch 6, der weiter so betrieben werden kann, dass er:
mindestens einen aus der Vielzahl von EPS-Knoten mit den gespeicherten gemeinsamen EPS-Trägerkontextdaten neu instanziiert, wobei die fehlgeschlagene Kommunikationssitzung wiederhergestellt wird, die über die Kommunikationssitzungskennung identifiziert ist.

8. Netzwerkknoten (14, 19) nach Anspruch 7, der weiter so betrieben werden kann, dass er:
eine Neuinstanziierungsanzeige von mindestens einem aus der Vielzahl von EPS-Knoten erfasst;
aktuelle EPS-Trägerkontextdaten des mindestens einen aus der Vielzahl von EPS-Knoten mit den gespeicherten gemeinsamen EPS-Trägerkontextdaten vergleicht;
wobei falls die aktuellen EPS-Trägerkontextdaten nicht mit den gespeicherten gemeinsamen EPS-Trägerkontextdaten übereinstimmen, der mindestens eine aus der Vielzahl von EPS-Knoten neu instanziiert wird.

9. Netzwerkknoten (14, 19) nach Anspruch 8, wobei das Neuinstanziieren des mindestens einen aus der Vielzahl von EPS-Knoten das Neuinstanziieren von jedem aus der Vielzahl von EPS-Knoten, die an der Kommunikationssitzung beteiligt sind, auf Basis der gespeicherten gemeinsamen EPS-Trägerkontextdaten umfasst.

10. Netzwerkknoten (14, 19) nach einem der Ansprüche 6-9, der weiter so betrieben werden kann, dass er die gemeinsamen EPS-Trägerkontextdaten in einer Datenbank speichert, die den beteiligten EPS-Knoten gemein ist.

11. Netzwerkknoten (14, 19) nach einem der Ansprüche 6-10, wobei die Kennung von jedem aus der Vielzahl von EPS-Knoten, die an der Kommunikationssitzung beteiligt sind, eine Internet Protocol-, IP, Adresse umfasst.

12. Computerprogramm (27), das computerausführbare Anweisungen umfasst, um eine Vorrichtung (14, 19) dazu zu bringen, Schritte nach einem der Ansprüche 1-5 durchzuführen, wenn die computerausführbaren Anweisungen auf einer Verarbeitungseinheit (25) ausgeführt werden, die in der Vorrichtung eingeschlossen ist.

13. Computerprogrammprodukt, das ein computerlesbares Medium (26) umfasst, wobei das computerlesbare Medium das Computerprogramm (27) nach Anspruch 12 in demselben ausgeführt aufweist.

## Revendications

1. Procédé dans un réseau de communications de Système de Paquet Évolué, EPS, consistant à faciliter le rétablissement d'une session de communications défaillante entreprise via une pluralité de noeuds EPS, étant **caractérisé en ce qu'**il comprend :
l'acquisition (S101) de données de contexte de support EPS de chacun de la pluralité de noeuds EPS impliqués dans la session de communication ;
la combinaison (S102) des données de contexte de support EPS acquises de chacun de la pluralité de noeuds EPS en données de contexte de support EPS communes à la pluralité de noeuds EPS ;
l'association (S103) des données de contexte de support EPS communes avec un identificateur de session de communication et un identificateur de chacun de la pluralité de noeuds EPS impliqués dans la session de communication ; et
le stockage (S104) des données de contexte de support EPS communes et des identificateurs pour le rétablissement de la session de communications à partir des données de contexte de support EPS communes en cas de défaillance.

2. Procédé selon la revendication 1, comprenant en outre :
la réinstanciation (S108) d'au moins un de la pluralité de noeuds EPS avec les données de contexte de support EPS communes stockées, dans lequel la session de communication défaillante identifiée par l'identificateur de session de communication est rétablie.

3. Procédé selon la revendication 2, comprenant en outre :
l'acquisition (S105) d'une indication de réinstanciation d'au moins un de la pluralité de noeuds EPS ;
la comparaison (S107) de données de contexte de support EPS actuelles dudit au moins un de la pluralité de noeuds EPS aux données de contexte de support EPS communes stockées ; dans lequel dans le cas où les données de contexte de support EPS actuelles ne se conforment pas aux données de contexte de support EPS communes stockées, l'au moins un de la pluralité de noeuds EPS est réinstancié.

4. Procédé selon la revendication 3, dans lequel la réinstanciation (S108) dudit au moins un de la pluralité de noeuds EPS comprend la réinstanciation de chacun de la pluralité de noeuds EPS impliqués dans la session de communication sur la base des données de contexte de support EPS communes stockées.

5. Procédé selon l'une quelconque des revendications précédentes, les données de contexte de support EPS communes étant stockées dans une base de données commune aux noeuds EPS impliqués.

6. Noeud de réseau (14, 19) dans un réseau de communications de Système de Paquet Évolué, EPS, configuré pour faciliter le rétablissement d'une session de communications défaillante entreprise via une pluralité de noeuds EPS, comprenant une unité de traitement (25) et une mémoire (26), ladite mémoire contenant des instructions exécutables par ladite unité de traitement, de sorte que ledit noeud de réseau est caractérisé en étant opérationnel pour :
acquérir des données de contexte de support EPS de chacun de la pluralité de noeuds EPS impliqués dans la session de communication ;
combiner les données de contexte de support EPS acquises de chacun de la pluralité de noeuds EPS en données de contexte de support EPS communes à la pluralité de noeuds EPS ;
associer les données de contexte de support EPS communes avec un identificateur de session de communication et un identificateur de chacun de la pluralité de noeuds EPS impliqués dans la session de communication ; et
stocker les données de contexte de support EPS communes et les identificateurs pour le rétablissement de la session de communications à partir des données de contexte de support EPS communes en cas de défaillance.

7. Noeud de réseau (14, 19) selon la revendication 6, étant en outre opérationnel pour :
réinstancier au moins un de la pluralité de noeuds EPS avec les données de contexte de support EPS communes stockées, dans lequel la session de communication défaillante identifiée par l'identificateur de session de communication est rétablie.

8. Noeud de réseau (14, 19) selon la revendication 7, étant en outre opérationnel pour :
acquérir une indication de réinstanciation d'au moins un de la pluralité de noeuds EPS ;
comparer des données de contexte de support EPS courantes dudit au moins un de la pluralité de noeuds EPS aux données de contexte de support EPS communes stockées ; dans lequel dans le cas où les données de contexte de support EPS courantes ne se conforment pas aux données de contexte de support EPS communes stockées, l'au moins un de la pluralité de noeuds EPS est réinstancié.

9. Noeud de réseau (14, 19) selon la revendication 8, dans lequel la réinstanciation dudit au moins un de la pluralité de noeuds EPS comprend la réinstanciation de chacun de la pluralité de noeuds EPS impliqués dans la session de communication sur la base des données de contexte de support EPS communes stockées.

10. Noeud de réseau (14, 19) selon l'une quelconque des revendications 6 à 9, étant en outre opérationnel pour stocker les données de contexte de support EPS communes dans une base de données commune aux noeuds EPS impliqués.

11. Noeud de réseau (14, 19) selon l'une quelconque des revendications 6 à 10, dans lequel ledit identificateur de chacun de la pluralité de noeuds EPS impliqués dans la session de communication comprend une adresse de Protocole Internet, IP.

12. Programme informatique (27) comprenant des instructions pouvant être exécutées par ordinateur pour amener un dispositif (14, 19) à effectuer des étapes mentionnées dans l'une quelconque de revendications 1 à 5 quand les instructions pouvant être exécutées par ordinateur sont exécutées sur une unité de traitement (25) incluse dans le dispositif.

13. Produit formant programme informatique comprenant un support lisible sur ordinateur (26), le support lisible sur ordinateur ayant le programme informatique (27) selon la revendication 12 incorporé en son sein.
